(19) Europäisches Patentamt
European Patent Office
Office européen des brevets

(11) EP 0 680 228 B1

(12) **EUROPEAN PATENT SPECIFICATION**

(45) Date of publication and mention of the grant of the patent:
**16.05.2001 Bulletin 2001/20**

(51) Int Cl.⁷: **H04N 9/79**

(21) Application number: **95302048.4**

(22) Date of filing: **28.03.1995**

# (54) Video signal processing circuit

Fernsehsignalbearbeitungsschaltung

Circuit de traitement de signal vidéo

(84) Designated Contracting States:
**FR**

(30) Priority: **28.03.1994 JP 5781994**
**28.07.1994 JP 17648894**

(43) Date of publication of application:
**02.11.1995 Bulletin 1995/44**

(60) Divisional application:
**98121756.5 / 0 901 292**

(73) Proprietors:
- **KABUSHIKI KAISHA TOSHIBA**
**Kawasaki-shi, Kanagawa-ken 210-8572 (JP)**
- **TOSHIBA AVE CO., LTD**
**Minato-ku, Tokyo 105 (JP)**

(72) Inventors:
- **Murayama, Akihiro, c/o Intellectual Prop. Div.**
**Minato-ku, Tokyo (JP)**
- **Morita, Makoto, c/o Intellectual Prop. Div.**
**Minato-ku, Tokyo (JP)**

(74) Representative: **Muir, Ian R. et al**
**Haseltine Lake & Co.,**
**Imperial House,**
**15-19 Kingsway**
**London WC2B 6UD (GB)**

(56) References cited:
**GB-A- 2 132 810**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 680 228 B1

## Description

The present invention generally relates to a video signal processing circuit which operates a color processing in a video signal recording reproducing apparatus.

The present invention relates in particular to a chroma recording signal processing circuit which is suitable in using a L-SECAM system VCR (VTR),

A conventional L-SECAM system VCR recording signal processing circuit is shown in FIGURE 8. In the drawing 1 denotes an input terminal. A SECAM baseband signal input to the input terminal 1 is applied to a band-pass filter 2 having 4.3 MHz center frequency (fo). wherein only a SECAM chroma signal is extracted. The output of the band pass filter 2 is input to a bell-shape filter 3 with the 0.286 MHz center frequency f0 and cancels an amplitude and a delay characteristics of an inverse bell-shape filter added on the transmission side. The group delay characteristic and the amplitude characteristic of the chroma signal are flattened after passing through the filter. The output of the bell-shape filter 3 inputs to a limiter 4 and removes a small mixed noise. The output of the limiter 4 inputs to a factor of 4 frequency divider 5 and divide the frequency to 1/4 times. The factor of 4 frequency division by the factor of 4 frequency divider 5 is specific to the L-SECAM system, performs a down conversion of the chroma signal from near 4 MHz to 1 MHz. The output of the factor of 4 frequency divider 5 suppresses a carrier energy via the band pass filter 6 with 1.1 MHz and the inverse bell-shape filter 7 with the center frequency fo of the 1.0715 MHz and outputs the energy to sn output terminal 9 as a recording chroma signal.

Signal waveforms in each signal stage as shown in FIGURE 8 is explained using FIGURE 9. The descriptions of the group delays of the filters will be omitted for the simplify of explanation. If a chroma signal (b) which is extracted from the composite signal (a) shown in the enlarged view of the horizontal retrace period by a band pass filter 2 passes through a bell-shape filter 3, the signal waveform in this case leaves its trace at the chromes ending point and rises gradually at the leading edge of chroma signal (IDENT) as like the waveform (c). It is because the Q of the bell-shape filter is as high as 16. When a signal (d) which is amplified by the limiter 4 is divided by the factor of 4 by the factor of 4 divider 5, it becomes a signal (e), Finally the output signal of the inverse bell-shape filter 6 greatly expands at the chroma starting instant and the ending instant, as like the waveform (f). It is because Q (Q in numerator of transfer function) of the inverse bell-shape filter is also as high as 16.

When such a signal is recorded together with a Y (luminance) signal which is processed an FM modulation, some recording level leads to an over modulation and leads to signal state which becomes impossible to reproduce the signal rightly since the Y signal starts a phase inversion. To avoid these states, the ways that the swollen parts of the output waveform (f) of the inverse bell-shape filter 6 are non-linearly suppressed, or the Q of the inverse bell-shape filter 6 is lowered, have been employed.

However, when performing the non-linear suppression the high frequency energy at the swollen parts increases, and it arises a tracing noise or a color impairment such as red tinge on the leftside of the picture at the reproducing operation. When lowering the Q of the inverse bell-shape filter 6, it tends to fall outside the standard and to deteriorate a transient performance of color since the group delay of the chroma signal does not match with other apparatus as reproducing.

As described above, the conventional SECAM system recording circuit have a drawback that it can not reduce the large amplitude portion at the ohroma starting instant and ending instant without deteriorations of any other performance.

A another conventional system of the recording reproducing apparatus of the SECAM signal is shown in FIGURE 15. In the drawing. 1 denotes an inverse bell-shape filter for recording, 172 denotes a Y/C adder for recording, 173 denotes a Y/C separator for reproducing, and 174 denotes a bell-shape filter for reproducing. Further, waveforms of the signals a, b, e and f in FIGURE 15 are illustrated as (a). (b), (e) and (f) in FIGURE 16.

In recording time, an inverse bell-shape filter 171 is applied a SECAM color signal (a) which is down-converted the frequency by a factor of four (1/4) through a frequency down-converter (not shown in FIGURE 15). The inverse bell-shape filter 171 provides an inverse bell-shape characteriatics as shown in FIGURE 16(b). The signal is then added with a luminance signal in a Y/C adder 172. The output signal c of the Y/C adder 172 is shown in FIGURE 16 (c). The signal c is then recorded on a recording medium (not shown in FIGURE 15).

In a reproducing operation, a SECAM composite signal d reproduced from the recording medium (not shown in FIGURE 15) is input to a Y/C separator 173. The SECAM composite signal d is removed a luminance signal component therefrom in the Y/C separator 173, thus obtained a SECAM color signal e (see FIGURE 16(e)). The SECAM color signal e is then flattened its amplitude envelope and group delay characteristics which are provided in the inverse bell-shape filter 171 in recording operation in the bell-shape filter 174, as shown in FIGURE 16(f).

Here, the output waveform b of the inverse bell-shape filter 171 as shown in FIGURE 16(b) according to a signal respond in the inverse bell-shape filter. Between the two, a front porch side signal 1 is output a energy which is stored inside of the inverse bell-shape filter 171. it causes a jitter deterioration when it is piled up the horizontal synchronizing signal by the Y/C adder 172. Accordingly, it is desirable to suppress or remove the front porch side signal.

However, to suppress or remove the front porch side signal in recording operation causes a pictue quality deterioration in the bell-shape filter 174 in the reproducing operation. It is explained'by using FIGURE 17 and FIGURE 18.

In FIGURE 17, only the gate circuit 181 for removing the front porch side signal is defined between the inverse bell-shape filter 171 for recording and the Y/C adder 172 for recording in FIGURE 15. Other constituent parts in FIGURE 17 are the same as in FIGURE 15. The signal waveforms a, b', e', f' in FIGURE 17 are shown in FIGURE 18 as (a), (b'). (e'), (f').

In recording operation, a SECAM color signal a is given an inverse bell-shape characteristics in the inverse bell-shape filter 171. Then in a Rate circuit 181 the SECAM color signal a is removed signals on the front porch side, thus obtained the signal b'. The signal b' is added with a luminance signal in the Y/C adder 172 so as to output the signal c', which is then recorded on a recording medium (not shown).

In reproducing operation, a luminance signal component is removed from the SECAM composite signal c' which is reproduced from the recording medium (not shown in FIGURE 18) in the Y/C separator 173, thus the signal e' is obtained. Then the amplitude envelope and the group delay characteristics which are given in the inverse bell-shape filter 171 in recording operation are flattened in the bell-shape filter 174.

However, the energy stored inside of the bell-shape filter 174 is output in the removed parts, and it become a undesired signal. Although the undesired signal becomes short since the lower the Q of the bell-shape filter is the more losses it suffers the undesired signal inside of the bell shaped filter 174. Since typical bell-shape filters in the SECAM signal recording reproducing apparatus have a high Q, the bell-shape filter 174 leaves it's trace as f' and it appears as a noise on the left side of the screen display actual picture as being overlapped with the next line color signal.

The way to prevent this phenomenon in the conventional SECAM signal recording reproducing apparatus is to lower the Q of the bell-shape filter 174 to shorten the undesired signal. However, if the Q of the bell-shape filter is lowered it will be hard to flatten the amplitude envelope and the group delay characteristics, since it can not match with the recording inverse bell-shape filter 171.

As described above, the conventional SECAM system video signal processing circuit has a drawback that since the undesired signal which is produced by the signal response of the bell-shape filter in the reproducing apparatus causes the noise on the left side of the picture when the gating is applied in the horizontal retrace interval in recording operation for such as a jitter improvement, it has to reduce the undesired signal as the Q of the bell-shape filter of the reproducing apparatus is lowered evenly and the color transient is also lowered.

An object of the present invention is therefore to remove the drawbacks in the conventional apparatus. That is, the present invention has an object to provide a L-SECAM chroma recording processing circuit which is able to suppress the amplitude at the chroma starting instant and ending instant without deteriorations of any other performance.

In order to achieve the above object, a video signal processing circuit according to the present invention includes in a SECAM system recording processing that a signal which obtained by means of supplying an input chroma signal of L-SECAM signals to a bell-shape filter is divided into 1/4 times frequency and output as a chroma for recording which suppress a carrier energy through an inverse bell-shape filter, amplitude modifying means for changing an envelope of the chroma signal to an exponential function or a RAMP function at a chroma ending instant and starting instant of a horizontal retrace period in a signal processing between the rear of the factor of 4 frequency divider and the front of the inverse bell-shape filter.

According to the arrangement of the invention described above, viewing the composite video signal input the waveform at the chroma signal ending instant and starting instant is not a large amplitude though it is through the inverse bell-shape filter at the transmission side. It is because the retrace interval is blanked after passing the FM chroma signal which continues in the retrace interval all along through the inverse bell-shape filter. That is when signal which leaves it's trace and rises bluntly as passing through the bell-shape filter is repassed the inverse bell-shape filter the envelope of the signal will be equal in nature to the chroma envelope of the composite video signal. However, since the limiter processing is contained in the L-SECAM processing the envelope information of the bell-shape filter output have been lost. Taking notice in this point, it is provided that the factor of 4 frequency division signal (this is also a limiter operation) end with leaving it's trace and starts gradually until it output in the next stage, and it is able to output a recording signal with an envelope which is exactly close to that of the chroma signal of the composite video signal input.

Additional objects and advantages of the present invention will be apparent to persons skilled in the art from a study of the following description and the accompanying drawings, which are hereby incorporated in and constitute a part of this specification.

For a batter understandings of the present invention and many of the attendant advantages thereof, reference will now be made by way of example to the accompanying drawings, wherein:

FIGURE 1 is a system diagram for explaining an embodiment of the SECAM system recording circuit according to the present invention ;

FIGURE 2 is a signal waveform diagram for explaining the operation of the circuit of FIGURE 1 ;

FIGURE 3 is a signal waveform diagram for explaining the processing the chroma signal in FIGURE 1 ;

FIGURE 4 is a circuit diagram for explaining the embodiment of the gain control circuit of FIGURE 1;

FIGURE 5 is a system diagram for explaining another embodiment of the timing signal generating circuit of FIGURE 1 ;

FIGURE 6 is a signal waveform diagram for explaining a modification shown in FIGURE 5;

FIGURE 7 is a system diagram for explaining the modification of FIGURE 1;

FIGURE 8 is a system diagram for explaining an example of conventional processing circuit;

FIGURE 9 is a signal waveform diagram for explaining the operation of the circuit of FIGURE 8;

FIGURE 10 is a diagram showing a circuit arrangement for explaining another video signal processing circuit

FIGURE 11 is a signal waveform diagram for explaining the operation of the circuit of FIGURE 10;

FIGURE 12 is a diagram showing a circuit arrangement for explaining still another video signal processing circuit;

FIGURE 13 is a signal waveform diagram for explaining the operation of the circuit of FIGURE 12;

FIGURE 14 is a diagram showing a circuit arrangement for explaining the detailed circuit arrangement usable for the bell-shape filter and the inverse bell-shape filter

FIGURE 15 is a diagram showing a circuit arrangement of a conventional recording reproducing processing circuit of SECAM signals;

FIGURE 16 is a signal waveform diagram for explaining the operation of the the circuit of FIGURE 15;

FIGURE 17 is a diagram showing a circuit arrangement of another conventional recording reproducing processing circuit for SECAM signals, including a gate circuit; and

FIGURE 18 is a signal waveform diagram for explaining the operation of the circuit of FIGURE 17.

An embodiment of the SECAM system recording circuit according to the present invention will be explained hereinafter in reference to the drawings. FIGURE 1 is a system diagram for explaining one embodiment of this invention. The composite video signal is input to the input terminal 1 and only the chroma signal component is extracted by the 4.3 MHz band pass filter 2. The chroma signal is input to the bell-shape filter 3 and the group delay and the amplitude of the inverse bell-shape filter passed through at the transmission side is be flat by canceling it's group•amp litude envelope. The output signal of the bell-shape filter 3 is amplitude by the limiter 4, then it is input to the factor of 4 frequency divider 5 to divide the frequency by the factor of 4. and the down conversion signal of the L-SECAM is obtained. The frequency division signal is input to a gain control circuit 11. The gain control signal of the gain control circuit 11 is produced by a timing generating circuit 12 and a time constant processing circuit 13. A gain controlled signal is passed through the 1.1 MHz band pass filter 61 so that the gain controlled signal is removed undesired high frequency components or noise components therefrom. The output of the band pass filter 61 is input to the inverse bell-shape filter so as to be suppressed the energy of the carrier signal. The output of the inverse bell-shape filter 71 is output to the output terminal 81 as' the L-SECAM chroma recording signal.

The operation of the inverse bell-shape filter 71 will be explained some more. The inverse bell-shape filter 71 is a type of trap system filter designed for suppressing signals by 20dB at their center frequency. That is, when a signal is continuously input it's inverting signal is produced as much energy as the input signal at the filter so as that the input signal is cancelled by the inverting signal. When in the condition the input has abruptly decreased, the inverting signal presents at a large amplitude without being cancelled. It is because that the energy previously stored in the filter still remains just after the instant that the input has been removed. If on the other hand the input signal abruptly increases in a condition that no energy is stored in the filter, the input signal present as its so large amplitude. It is also because that any energy capable of cancelling the large amplitude input is not yet stored. By noting the decreasing and increasing of energy in filters, this embodiment is directed to flatten the output amplitude by providing the inverse bell-shape filter 71 with a signal corresponding to the decreasing and increasing of energy at the inverse bell-shape filter 71.

Referring now to FIGURE 2, the gain control signal will be explained. In brief descriptions, a timing pulse (b) indicating non chroma intervals in the retrace interval of the composite video signal (a), as shown in FIGURE 2(1), is generated from the timing generating circuit 12. Based on the timing signals (b) a pulse (c) with a prescribed RAMP function is produced in the time constant processing circuit 13. The pulse (c) is supplied to the gain control circuit 11. The gain control circuit 11 controls to increase the gain of signals in response to the high level Hi of the pulse (c) while decrease the gain in response to the low level Lo of the pulse (c). When it is designed to generate pulses such as the pulse (c) using an IC the RAMP function will be realized by charging and discharging operations of capacitors for constant currents applied thereto. Further, the time constant proccesing circuit 13 can be designed to make the pulse (c) have a prescribed exponential function based on the timing pulse (b), as shown in FIGURE 2(2). in the time constant processing circuit 13. The exponential function is realized by supplying the timing signal into a combination of resistor and capacitor. In cases of the above two examples. though there can be employed several ways to suppress undesired dispersions of the time constant descriptions thereof are omitted herein.

Referring now to FIGURE 3, the state that the gain is controlled based on the pulse (c) as shown in FIGURE 2 will be explained. A chroma signal as shown in FIGURE 3(b) is extracted from a composite video signal as shown in FIGURE 3(a) by the 4.3 MHz BPF 2. When the chroma signal (b) is applied to the bell-shape filter 3, the output of the filter 3 leaves it's trace at the ending point and after that it gradually increases at the starting point, as shown in FIGURE 3(c). The signal (c) is amplified by a limiter 4, so that a signal as shown in FIGURE 3(d) is obtained. The signal (d) is then divided by the factor of 4 in a factor of 4 divider 5, so that a rectangular waveform signal as shown in FIGURE 3(e) is obtained. The signal (e) thus has an envelope different from that of the signal (c) output from the bell-shape filter 3. After that the signal (e) is processed with the RAMP function in the gain control circuit 11, so that a signal as shown in FIGURE 3(f) is obtained. The signal (f) is then applied to an inverse bell-shape filter 71. so that an output as shown in FIGURE 3(g) is obtained. The signal. (g) has a relatively uniform envelope as shown in FIGURE 3.

In the above embodiment, since the amplitude of the signal (g) gradually changes at the chroma ending instant at that the energy has been stored in the inverse bell-shape filter 71 and the chroma starting instant at that the energy is beginning to be stored in the filter 71, such an undesired state of abrupt changes of amplitude caused by filter operation is effective depressed.

Referring now to FIGURE 4, the details of the gain control circuit 11 will be described. It is assumed that the factor of 4 frequency divider 5 in front of the circuit 11 has a differential output. The frequency division signal obtained by the factor of 4 frequency divider 5 is converted into a current signal by a differential amplifier comprised of transistors Q1 and Q2. The current signal is single-ended in a PNP current mirror circuit comprised of transistors Q3 and Q4, and then flows into a load circuit comprised of a constant voltage supply Vr and a resistor R5. A voltage signal generated in the resistor R5 is output to the 1.1 MHz band pass filter 61 following the circuit 11. A bias current in the differential amplifier is supplied by the control circuit which is composed by transistors Q5 to Q8. An amplifier comprised of the transistor Q7 having its emitter coupled directly to a constant current source Io and the transistor Q8 having its emitter coupled to tho constant current source Io via a resistor R6. The collector of the transistor Q7 is coupled to a current mirror circuit comprised of NPN transistors Q5 and Q6. while the collector of the transistor Q5 is coupled to a common emitter node of transistors Q1 and Q2. The base of the transistor Q8 is provided for receiving the control signal as shown in FIGURE 2(c). If the base potentials of the transistors Q7 and Q8 balance with each other during the control signal (c) is in the high level Hi, the circuit gain becomes MAX so as to amplify the chroma signal since the current Io flows from the prescribed current supply to the transistors Q1 and Q2 with little current flow in the transistor Q8 due to a current suppression by the resistor R6. During the transistor Q8 is kept turned-ON while the transistor Q7 is kept turned-OFF. the signal (c) is in the low level state so as that the circuit gain becomes MIN. When the signal (c) is shifted. the current flowing through the resistor R8 linearly changes. so that the circuit gain changes as shown in FIGURE 2 (d) in similar to to the change of the signal (c). Thus an output such as shown in FIGURE 3(f) will be obtained.

Referring now to FIGURE 5, the timing signal generating circuit 12 for generating the timing signal as shown in FIGURE 2 is explained. It is assumed that the VCR includes a sync separator for separating the sync signal. The input sync signal is shaped its waveform by a slice circuit 51 and then input to an AFC (automatic frequency control circuit) 52. The output of the AFC 52 is smoothed in by a filter circuit (not shown) and then input to a VCO 53 for controlling thereof. An oscillation output of the VCO 53 is fed back to the AFC 52 via a frequency divider 54. Thus the AFC 52, the VCO 53 and the frequency divider 54 constitute a PLL. The timing signal is obtained by a pulse shaping performed by using a pulse shaping circuit 55 based on frequency division signals obtained from the frequency divider 54.

It is possible to generate frequency signals having a prescribed multiple (typically, 32 times) of the frequency of the horizontal sync signal thus synchronized with the sync signal. Accordingly it is also possible to generate pulses at any frequency by synthesizing the frequency division signals. Therefore it is possible to obtain dignified control signals having equal timings even if the dignity of the horizontal sync signal will deteriorate by a weak electric field.

Referring now to FIGURE 6, the relation between the timing signal and the control signal will be explained. When the signal (d) from the limiter 4 which is the amplified. signal of the output of the bell-shape filter 3 is divided by the factor of 4 in the factor of 4 frequency divider 5, the signal (d) leaves it's trace in the bell-shape filter 3 at the ending instant of the chroma signal. That is, the signal (d) has a delay portion as ohown by the shaded area in FIGURE 3(c). The delay portion or the shaded area is an undesired portion because its amplitude envelope tends to decrease as shown in FIGURE 3(c) so that its S/N is inferior to that of the input chroma signal. It is thus desired to remove the shaded portion since the noise components is further amplified in the inverse bell-shape filter 71 apparently, and thus exhibits noises on the leftside of the display screen when this shaded portion of the signal is reproduced.

In this case, when the timing signal begins from the instant at the undesired shaded portion and lasts to the starting instant of the IDENT signal only effective chroma signal is extracted as shown in FIGURE 6(b). In this time. in the time constant processing circuit 13 the trailing edge does not have the same time constant as that in the leading edge but be shaped as shown in FIGURE 6(c). So, the controlled gain decreases abruptly at the point A. and increases gradually at the point B, thus it is used for gating off the undesired portion. The points A and B are also shown in FIGURE 2 to accord with the timings shown in FIGURES 2 and 6. That is, the object of this invention will be attained by the combination of the RAMP function and the exponential function.

The bell-shape filter 3 of the recording processing is operated by the 4 MHz frequency, and the inverse bell-shape filter 71 is operated by the 1 MHz frequency which is the 1/4 times of the 4 MHz frequency. Accordingly, the group delay of the inverse bell-shape filter 71 is four times as much as that of the bell-shape filter 3. It is desired to use a 4.4 μ sec time constant to avoid the significant increase of the amplitude. However, the time constant which is suitable for the recording and the reproducing operations without any hindrance for an ACC amplification in the reproducing operation using TV receivers may be 0.5 μ sec to 1.5 μ sec. In this time constant a good result is obtained in the recording and the reproducing operations and also the display operation on the TV receivers.

Now, if it is assumed that the time constant is best suited to the L-SECAM recording operation, it is possible to obtain the control signal in a simple way by using the envelope of the bell-shape filters even if the circuit scale is not as large as that of FIGURE 5. One example of it is shown in FIGURE 7. Since the output signal of the bell-shape filter 3 become as shown in FIGURE 3(c) as described above. the gain of the gain control circuit 11 is controlled by the envelope detecting circuit 72 which receives the output of the special bell-shape filter 3. Since the group delay of the bell-shape filter 3 is 1.1 μ sec it can be lied within the limits as described above. But, since it is possible that the chroma signal will deteriorate the signal dignity in a weak 'electric field condition, and the envelope detecting output will be reversed in the image displaying interval. it is desirable to generate the window signal in the horizontal retrace interval from the system such as shown in FIGURE 5 and to perform the gain control operation using the envelope within the interval.

Further, the circuit as shown in FIGURE 1 is explained by the signal processing sequence that the signal advances the band pass filter 2 to the bell-shape filter 3, however, the content of the pre-filter or the post-filter as shown in FIGURE 1 is not limited to by the above embodiments. Further, though the gain control circuit 11 is employed in the above embodiments, it may be realized at any section in the recording processing block in FIGURE 1. Accordingly, . the gain of the factor of 4 frequency division can be controlled. Further, the gain of the limiter circuit can be controlled (or blanked) by the pulses as shown in FIGURE 8b and the output of the factor of 4 frequency divider can be subjected to the gain control by the pulse as shown in FIGURE 2 to obtain the effect as shown in FIGURE 6. It can be also obtained the same effect even if the objects subjected for the controlling are scattered in several portions in the circuit.

Essentially, it can be obtained the effect of this invention if the embodiment has the exponential or the RAMP in the signal processing circuit between the bell-shape filter and the inverse bell-shape filter.

As described above, the present invention can provide the SECAM system recording circuit which is able to avoid a great amplitude at the chroma ending instant and the starting instant after the inverse bell-shape filter and operates the recording processing by its natural characteristics without sacrificing other characteristic by using the circuit according to the present invention.

FIGURE 10 shows a circuit arrangement for illustrating a further SECAM signal recording reproducing apparatus, 111 denotes the inverse bell-shape filter for recording, 112 denotes the gate circuit for removing the front porch side signal of the video signal, 113 denotes the Y/C adder, 114 denotes the Y/C separator for reproducing, 115 denotes the bell-shape filter with an adjustable Q for reproducing, and 116 denotes the pulse signal generator. Further, waveforms of signals a, b, d, e and f in FIGURE 10 are shown as (a), (b), (d), (e) and (f) in FIGURE 11.

In recording operation, the SECAM color signal a which is down converted to 1/4 times frequency by a frequency down-converter (not shown in FIGURE 10) is input. The input signal a is given an inverse bell-shape characteristics by an inverse bell-shape filter 111, thus a signal b which is removed signal components on a front porch side is output from a gate circuit 112. Further, the signal c which is added with the luminance signal is output from a Y/C adder 113. The signal c is then recorded on a recording medium (not shown).

In the reproducing operation, the SECAM composite signal c is reproduced from the recording medium and then input to a Y/C separator 114. In the Y/C separator 114 the signal c is removed the luminance signal components therefrom. Then a SECAM color signal d thus obtained is applied to a bell-shape filter 115. The bell-shape filter 115 exhibits a high Q in the oolor signal period so as to flatten the amplitude envelope and group delay characteristics which is obtained in the inverse bell-shape filter 111 in recording operation. Further, the Q is lowered by a timing signal f which is generated from a pulse signal generator 116 in the retrace interval, accordingly the undesired signal is shortened, as shown in FIGURE 11(s).

The same effect as mentioned above can be obtained without the gate circuit 112, as will be explained hereinbelow in reference to FIGURES 12 and 13. In FIGURE 12, 131 denotes an inverse bell-shape filter having a adjustable Q for the recording operation in the SECAM signal recording reproducing apparatus. 132 denotes a pulse signal generator, 133 denotes a Y/C adder for the recording operation, 134 denotes a Y/C separator for the reproducing operation, 135 denotes the bell-shape filter having the variable Q for the reproducing operation. And 36 denotes a pulse generator. Further, waveforms of signals a, b, c. f, g in FIGURE 12 are shown as (a), (b), (c), (f), (g), (h) in FIGURE 13.

In the recording operation, the SECAM color signal a which is down converted to the 1/4 times frequency by the frequency down-converter (not shown in FIGURE 12) is input. The inverse bell-shape filter 131 exhibits a high Q in the color signal interval and gives the amplitude envelope and the group delay characteristics to the signal. When the 0 is lowered by the timing signal b input from the pulse signal generator 132 in the retrace interval the signals on the front porch of the video signal is compressed so as that a signal c is obtained. Then, the signal c is added with the luminance signal components in a Y/C adder 133 so as to produce an output d. which is then recorded on a recording medium (not shown in FIGURE 12).

In a reproducing operation, the recorded is reproduced from the recording medium and then applied to a Y/C separator 134. The Y/C separator 134 removes the luminance signal components from the SECAM composite signal d so as that a SECAM color signal e. which is then applied to a bell-shape filter 135 exhibiting a high Q in the color signal period. The bell-shape filter 135 flattens the amplitude envelope and the group delay characteristics which are obtained in the inverse bell-shape filter 131 in the recording operation. Further, the O is lowered by a Liming signal f which is input from a pulse signal generator 136 in the retrace intervals and thus the undesired signal becomes a short signal g. as shown in FIGURE 12(g).

Further, the more detailed arrangement of the bell-shape filter and the inverse bell-shape filter will be explained in reference to FIGURE 14. In FIGURE 14, 151 denotes an input terminal connected to the positive input + of a gm-amplifier 152. The output of the gm-amplifier 152 is connected to the positive input + of a gm-amplifier 154, as well as to both the input terminal 151 via a capacitor C1 and an attenuator 153. The output of the gm-amplifier 154 is connected to an output terminal 156 via a buffer amplifier 155, as well as to the input terminal 151 via a capacitor C2. The output of the buffer amplifier 155 is connected to a negative input - of the gm-amplifier 152. as well as to the negative input - of the gm-amplifier 154 via an attenuator 157.

Now. the input signal to the input terminal 151 is given as X and the output signal form the output terminal 156 is given as Y. Then a following transfer function is obtained.

$$Y/X = [S^2 + K1- gm2/(C2 \cdot S) + gm1 \cdot gm2/(C1 \cdot C2)]/[S^2 + K2 \cdot gm2/(C2 \cdot S) + gm1 \cdot gm2/(C1 \cdot C2)] \quad (1)$$

wherein, gm1 and gm2 represent the transconductances of the gm-amplifiers 152 and 154, C1, C2 represent the capacitances of the capacitors C1 and C2, and K1, K2 represent the attenuation factors of the attenuators 153 and 157.

For instance, when the circuit of FIGURE 14 is used for the bell-shape filter, the transfer function B(s) of the bell-shape filter will be expressed as follows by giving the central frequency as ωo:

$$B(s) = [S^2 + \{\omega o/(1.6)^{1/2}\} \cdot S + \omega o^2]/[S^2 + \{\omega o/(16)^{1/2}\} \cdot S + \omega o^2] \quad (2)$$

When in the equation (1) following equation 3 is assumed.

$$gm1/C1 = gm2/C2 = \omega o \quad (3)$$

so that, a following equation 4 will be obtained.

$$K1 = 1/(1.6)^{1/2}. K2 = 1/16 \quad (4)$$

From the above equations, it can be seen that the Q is able to be lowered if the attenuation factor of the attenuator 157 is lowered.

For instance, when the circuit of FIGURE 14 is used for the inverse bell-shape filter, the transfer function aB (s) of the Inverse bell-shape filter will be expressed as follows by giving the central frequency as ω o:

$$a \cdot B(s) = [S^2 + \{\omega o/16\} \cdot S + \omega o^2]/[S2 + \{\omega o/(1.6)^{1/2}\} \cdot S + \omega o^2] \quad (5)$$

When in the equation (1) following equation 3 is assumed.

$$gm1/C1 = gm2/C2 = \omega o \quad (6)$$

so that, a following equation 7 will be obtained.

$$K1 = 11/16. K2 = 11/(1.6)1/2 \quad (7)$$

From the above equations, it can be seen that the Q is able to be lowered if the attenuation factor of the attenuator 153 is lowered.

Accordingly, the bell-shape filter and the inverse bell-shape filter provided by properly setting the attenuation factor of the attenuators 153 and 157 depending to the recording operation mode or the reproducing operation mode. That is, the circuit of FIGURE 14 can be selectively used for the bell-shape filter and the inverse bell-shape filter instituted according to the recording mode or the reproducing mode.

As described above, the first aspect of the present invention can provide the SECAM system recording circuit which is able to avoid a great amplitude at the chroma ending instant and the starting instant after the inverse bell-shape filter and operates the recording processing by its natural characteristics without sacrificing other characteristic by using the circuit according to the present invention.

Also the second aspect of the present invention can provide a recording/processing apparatus for SECAM signals With the high jitter tolerance and no noise on the loft aide of the display screen by using the video signal processing circuit according to the present invention.

As described above, the present invention can provide an extremely preferable video signal processing circuit.

## Claims

1. A SECAM system recording circuit for processing the stages of supplying an input L-SECAM chroma signal into a bell-shape filter (3), dividing by a factor of 4 the frequency of the signal obtained by the supplying stage, outputting a recording chroma signal with an energy suppressed carrier by passing the frequency division signal through an inverse bell-shape filter (71), characterized in that:

   the recording circuit is provided with an amplitude modifying means (11) for modifying an envelope of the chroma signal into an envelope with an exponential function curve or a RAMP function curve at a chroma terminating instant and a chroma starting instant within a horizontal retrace period, said amplitude modifying means being located between the factor of 4 frequency divider (5) and the inverse bell-shape filter (71).

2. A SECAM system recording circuit as claimed in claim 1, characterized by that the amplitude modifying means comprises a variable gain circuit (11) and a control signal generating circuit (12, 13) for controlling the gain of the variable gain circuit (11).

3. A SECAM system recording circuit as claimed in claim 2, characterized by that the control signal generating circuit (12, 13) comprises a timing signal generating means (12) for generating pulses in synchronism with the chroma starting instant and the chroma terminating instant and a time constant circuit (13) generating a control signal having an envelope with the exponential function curve or the RAMP function curve from pulse signals.

4. A SECAM system recording circuit as claimed in claim 2, characterized by that the gain control circuit (11) controls the gain by using a detection output from an envelope detector (7) for detecting an envelope of the output from the bell-shape filter (3).

5. A SECAM system recording circuit as claimed in claim 3, characterized by that the timing signal generating means (12) comprises a PLL circuit for locking a system frequency into a sync signal and a frequency synthesizer for divide or synthesizing an oscillation signal of a VCO (53) in the PLL circuit.

6. A SECAM system recording circuit as claimed in claim 5, characterized by that the frequency synthesizer generates a window signal lasting for a prescribed period, and wherein a logical product of the window signal and the envelope detection output is used as the gain control signal.

7. The SECAM system recording circuit as claimed in claim 1 comprising

   a pre-filter comprising a band pass filter (2) which extracts only the chroma signal components by means of supplying an L-SECAM composite video signal and the bell-shape filter (3), which cancels a group delay and an amplitude envelope of the inverse bell-shape filter (71) passed at the transmission side and flattens the group delay and an amplitude envelope of the chroma signal;
a recording processor comprising a limiter (4) which controls the level of the output signal of the bell-shape filter (3) and amplifies the level, the factor of 4 frequency divider (5) which divides by the factor of 4 the frequency of the output signal of the limiter (4) so as to obtain a down conversion L-SECAM signal, and a gain control circuit (11) as the amplitude modifying means of claim 1, which controls the gain of the frequency division signal output from the frequency divider; and
a post-filter comprising a band pass filter (61). which removes an undesired high frequency or noise components of the gain controlled signal in the gain control signal and the inverse bell-shape filter (71) which is led as the L-SECAM chroma recording signal by means of inputting the output of the band pass filter and suppressing an energy of a carrier signal.

**8.** The SECAM system recording circuit as claimed in claim 7 is characterized by that the band pass filter (2) and the bell-shape filter (3) in the pre-filter have different processing order.

**9.** The SECAM system recording circuit as claimed in claim 7 characterized by that the band pass filter (61) in the post-filter and the inverse bell-shape filter (71) have different processing order.

**10.** A signal processing circuit comprising a SECAM system recording circuit as claimed in any preceding claim.

**11.** A VCR including a signal processing circuit as claimed in any preceding claim.

**Patentansprüche**

**1.** SECAM-Aufzeichnungsschaltung, die die folgenden Verarbeitungsschritte ausführt: Einspeisen eines eingegebenen L-SECAM-Farbsignals in ein Glockenkurvenfilter (3) ; Teilen der Frequenz des aus der speisenden Stufe erhaltenen Signals durch den Faktor 4; und Ausgeben eines Aufzeichnungs-Chrominanzsignals mit unterdrückter Trägerenergie, wobei das frequenzgeteilte Signal ein inverses Glockenkurvenfilter (71) durchläuft; dadurch gekennzeichnet dass
die Aufzeichnungsschaltung eine Amplitudenveränderungseinrichtung (11) enthält, die eine Hüllkurve des Chrominanzsignals in eine Hüllkurve in Form einer Exponentialfunktion oder einer Rampenfunktion modifiziert, und zwar am Ende und zu Beginn des Chrominanzsignals in einer Zeilenrücklaufperiode, und dass sich die Amplitudenveränderungseinrichtung zwischen dem Faktor-4-Frequenzteiler (5) und dem inversen Glockenkurvenfilter (71) befindet.

**2.** SECAM-Aufzeichnungsschaltung nach Anspruch 1, dadurch gekennzeichnet, dass die Amplitudenveränderungseinrichtung eine Schaltung (11) mit veränderlicher Verstärkung und eine Steuersignal-Erzeugungsschaltung (12, 13) umfasst, die die Verstärkung der Schaltung (11) mit veränderlicher Verstärkung steuert.

**3.** SECAM-Aufzeichnungsschaltung nach Anspruch 2, dadurch gekennzeichnet, dass die Steuersignal-Erzeugungsschaltung (12, 13) eine Timingsignal-Erzeugungsvorrichtung (12) enthält, die Impulse synchron zum Anfangs- und Endezeitpunkt des Chrominanzsignals erzeugt, und eine Zeitkonstantenschaltung (13), die aus den Pulssignalen ein Steuersignal erzeugt, dessen Hüllkurve eine Exponentialfunktion oder eine Rampenfunktion ist.

**4.** SECAM-Aufzeichnungsschaltung nach Anspruch 2, dadurch gekennzeichnet, dass die Verstärkungsregelschaltung (11) die Verstärkung unter Verwendung eines Erfassungssignals regelt, das ein Hüllkurvendetektor (7) ausgibt, der die Hüllkurve des Ausgangssignals des Glockenkurvenfilters (3) erfasst.

**5.** SECAM-Aufzeichnungsschaltung nach Anspruch 3, dadurch gekennzeichnet, dass die Timingsignal-Erzeugungsvorrichtung (12) eine PLL-Schaltung umfasst, die eine Systemfrequenz mit einem Synchronisiersignal verriegelt, und einen Frequenzsynthesizer, der ein Schwingungssignal eines VCO (53) in der PLL-Schaltung teilt oder synthetisiert.

**6.** SECAM-Aufzeichnungsschaltung nach Anspruch 5, dadurch gekennzeichnet, dass der Frequenzsynthesizer ein Fenstersignal mit vorgeschriebener Periodendauer erzeugt, und dass ein logisches Produkt des Fenstersignals mit dem Ausgangssignal des Hüllkurvendetektors als Verstärkungsregelsignal verwendet wird.

**7.** SECAM-Aufzeichnungsschaltung nach Anspruch 1, umfassend:

ein Vorfilter, das ein Bandpassfilter (2) enthält, das aus einem zugeführten zusammengesetzten L-SECAM-Videosignal nur die Chrominanzsignalanteile entnimmt, und das Glockenkurvenfilter (3), das eine Gruppenlaufzeit und eine Amplitudenhüllkurve des senderseitig durchlaufenen inversen Glockenkurvenfilters (71) beseitigt und die Gruppenlaufzeit und eine Amplitudenhüllkurve des Chrominanzsignals glättet;
einen Aufzeichnungsprozessor, beinhaltend einen Begrenzer (4), der den Ausgangssignalpegel des Glockenkurvenfilters (3) regelt und den Pegel verstärkt, den Faktor-4-Frequenzteiler (5), der die Frequenz des Ausgangssignals des Begrenzers (4) durch den Faktor 4 teilt und damit ein abwärts gewandeltes L-SECAM-Signal ermittelt, und eine Verstärkungsregelschaltung (11) als Amplitudenveränderungseinrichtung nach Anspruch 1, die die Verstärkung des vom Frequenzteiler ausgegebenen Frequenzteilersignals regelt; und
ein Nachfilter, das ein Bandpassfilter (61) enthält, das unerwünschte Hochfrequenz- oder Rauschanteile des verstärkungsgeregelten Signals im Verstärkungregelsignal entfernt, und das inverse Glockenkurvenfilter (71), das das L-SECAM-Chrominanzaufzeichnungssignal liefert, indem es im aufgenommenen Ausgangssignal des Bandpassfilters die Energie des Trägersignals unterdrückt.

8. SECAM-Aufzeichnungsschaltung nach Anspruch 7, dadurch gekennzeichnet, dass das Bandpassfilter (2) und das Glockenkurvenfilter (3) im Vorfilter eine unterschiedliche Verarbeitungsreihenfolge aufweisen.

9. SECAM-Aufzeichnungsschaltung nach Anspruch 7, dadurch gekennzeichnet, dass das Bandpassfilter (61) im Nachfilter und das inverse Glockenkurvenfilter (71) eine unterschiedliche Verarbeitungsreihenfolge aufweisen.

10. Signalverarbeitungsschaltung, umfassend eine SECAM-Aufzeichnungsschaltung nach irgendeinem vorhergehenden Anspruch.

11. VCR, der eine Signalverarbeitungsschaltung nach irgendeinem vorhergehenden Anspruch enthält.

## Revendications

1. Un circuit d'enregistrement du système SECAM pour traiter les étages d'amenée d'un signal de chrominance d'entrée L-SECAM dans un filtre en cloche (3), de division par un facteur de 4 de la fréquence du signal obtenu par l'étage d'amenée, de fourniture d'un signal de chrominance d'enregistrement avec une porteuse à suppression d'énergie en faisant passer le signal de division de fréquence à travers un filtre en cloche inverse (71), caractérisé en ce que :

   le circuit d'enregistrement est muni d'un moyen de modification d'amplitude (11) pour modifier une enveloppe du signal de chrominance en une enveloppe avec une courbe de fonction exponentielle ou une courbe de fonction RAMPE à un instant de fin de chrominance et à un instant de début de chrominance à l'intérieur d'une période de suppression horizontale, ledit moyen de modification d'amplitude étant placé entre le diviseur de fréquence de facteur de 4 (5) et le filtre en cloche inverse (71).

2. Un circuit d'enregistrement du système SECAM comme revendiqué à la revendication 1, caractérisé en ce que le moyen de modification d'amplitude comprend un circuit à gain variable (11) et un circuit de formation de signal de commande (12, 13) pour commander le gain du circuit à gain variable (11).

3. Un circuit d'enregistrement du système SECAM comme revendiqué à la revendication 2, caractérisé en ce que le circuit de formation de signal de commande (12, 13) comprend un moyen de formation de signal de synchronisation (12) pour former des impulsions en synchronisme avec l'instant de début de chrominance et l'instant de fin de chrominance et un circuit à constante de temps (13) produisant un signal de commande présentant une enveloppe avec la courbe de fonction exponentielle ou la courbe de fonction RAMPE à partir de signaux impulsionnels.

4. Un circuit d'enregistrement du système SECAM comme revendiqué à la revendication 2, caractérisé en ce que le circuit de commande de gain (11) commande le gain en utilisant une sortie de détection d'un détecteur d'enveloppe (7) pour détecter une enveloppe de la sortie du filtre en cloche (3).

5. Un circuit d'enregistrement du système SECAM comme revendiqué à la revendication 3, caractérisé en ce que le moyen de formation de signal de synchronisation (12) comprend un circuit à boucle à verrouillage de phase pour verrouiller une fréquence système en un signal de synchronisation, et un synthétiseur de fréquences pour diviser ou synthétiser un signal d'oscillation d'un oscillateur commandé par tension (53) du circuit à boucle à verrouillage de phase.

6. Un circuit d'enregistrement du système SECAM comme revendiqué à la revendication 5, caractérisé par le fait que le synthétiseur de fréquences produit un signal d'ouverture qui dure pendant une période prescrite, et dans lequel un produit logique du signal d'ouverture et de la sortie de détection d'enveloppe est utilisé en tant que signal de commande de gain.

7. Le circuit d'enregistrement du système SECAM comme revendiqué à la revendication 1 comprenant

un préfiltre comportant un filtre passe-bande (2) qui extrait uniquement les composantes du signal de chrominance au moyen de la fourniture d'un signal vidéo composite L-SECAM et le filtre en cloche (3), lequel annule un retard de groupe et une enveloppe d'amplitude du filtre en cloche inverse (71) amenée à passer au niveau du côté de transmission et aplatit le retard de groupe et une enveloppe d'amplitude du signal de chrominance ;
un organe de traitement d'enregistrement comprenant un limiteur (4) qui commande le niveau du signal de sortie du filtre en cloche (3) et amplifie le niveau, le diviseur de fréquence de facteur de 4 (5) qui divise, par le facteur de 4, la fréquence du signal de sortie du limiteur (4) de manière à obtenir un changement de fréquence du signal L-SECAM, et un circuit de commande de gain (11) en tant que moyen de modification d'amplitude de la revendication 1, lequel commande le gain du signal de division de fréquence sortant du diviseur de fréquence; et
un post-filtre comprenant un filtre passe-bande (61) qui retire une composante haute fréquence ou une composante de bruit indésirable du signal à gain commandé contenu dans le signal de commande de gain et le filtre en bande inverse (71) qui est conduit comme étant le signal d'enregistrement de chrominance L-SECAM au moyen de l'application de la sortie du filtre passe-bande et de la suppression d'une énergie d'un signal porteur.

8. Le circuit d'enregistrement du système SECAM comme revendiqué à la revendication 7, caractérisé par le fait que le filtre passe-bande (2) et le filtre en cloche (3) du préfiltre présentent un ordre de traitement différent.

9. Le circuit d'enregistrement du système SECAM comme revendiqué à la revendication 7, caractérisé par le fait que le filtre passe-bande (61) contenu dans le post-filtre et le filtre en cloche inverse (71) présentent un ordre de traitement différent.

10. Un circuit de traitement de signal comprenant un circuit d'enregistrement du système SECAM comme revendiqué dans une quelconque revendication précédente.

11. Un magnétoscope comprenant un circuit de traitement de signal comme revendiqué dans une quelconque revendication précédente.

FIG. 1

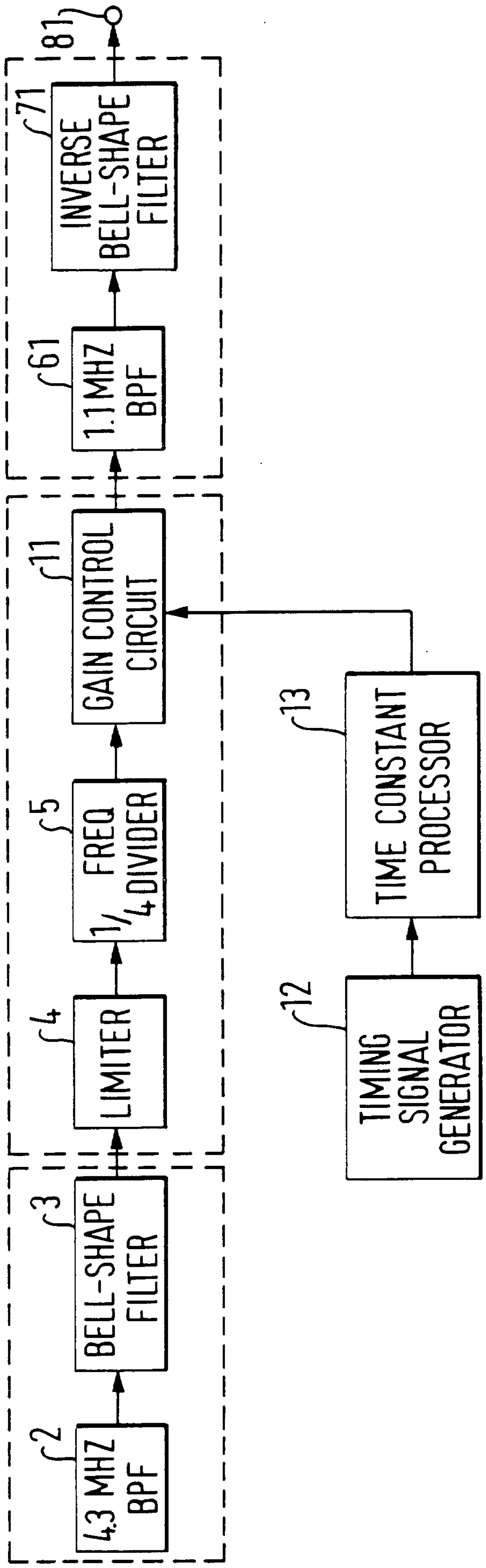

4.3 MHZ BPF
2
BELL-SHAPE FILTER
3
LIMITER
4
1/4 FREQ DIVIDER
5
GAIN CONTROL CIRCUIT
11
1.1 MHZ BPF
61
INVERSE BELL-SHAPE FILTER
71
81
TIMING SIGNAL GENERATOR
12
TIME CONSTANT PROCESSOR
13

FIG. 2(1)

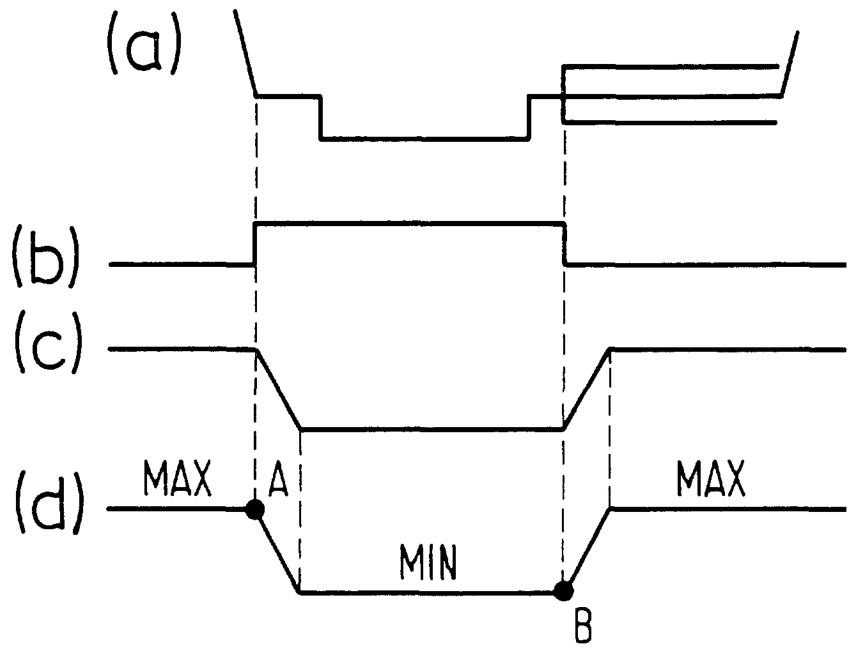


FIG. 2(2)

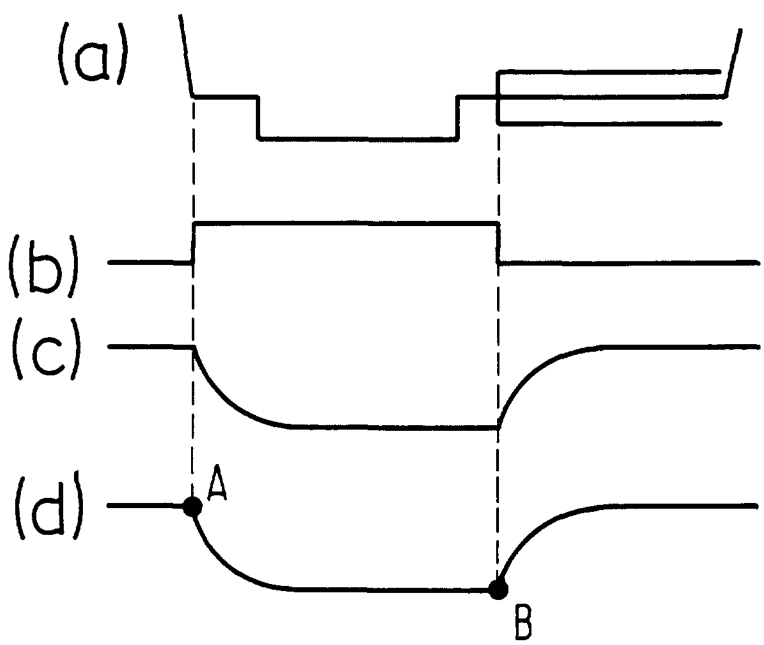

FIG. 3(a)

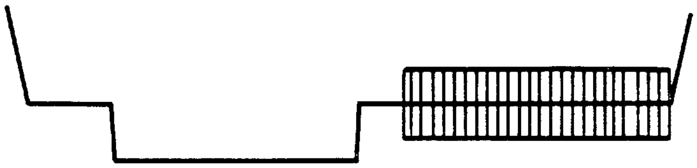

FIG. 3(b)

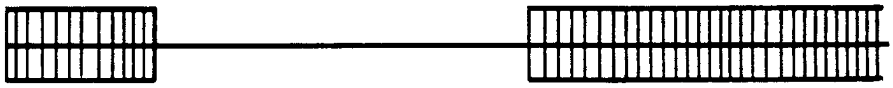

FIG. 3(c)

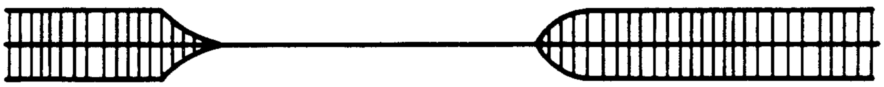

FIG. 3(d)

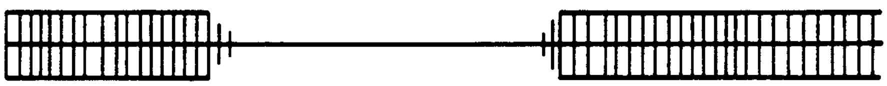

FIG. 3(e)

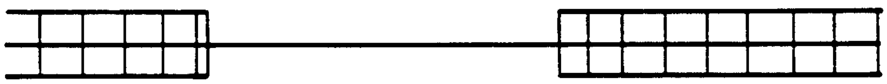

FIG. 3(f)

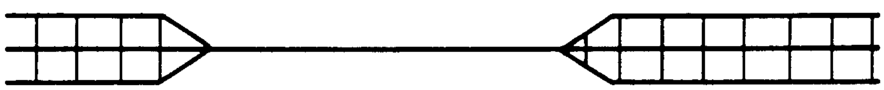

FIG. 3(g)

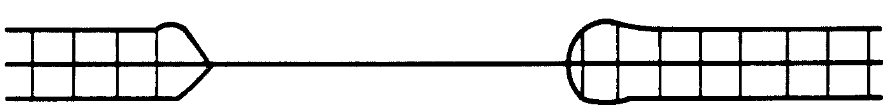

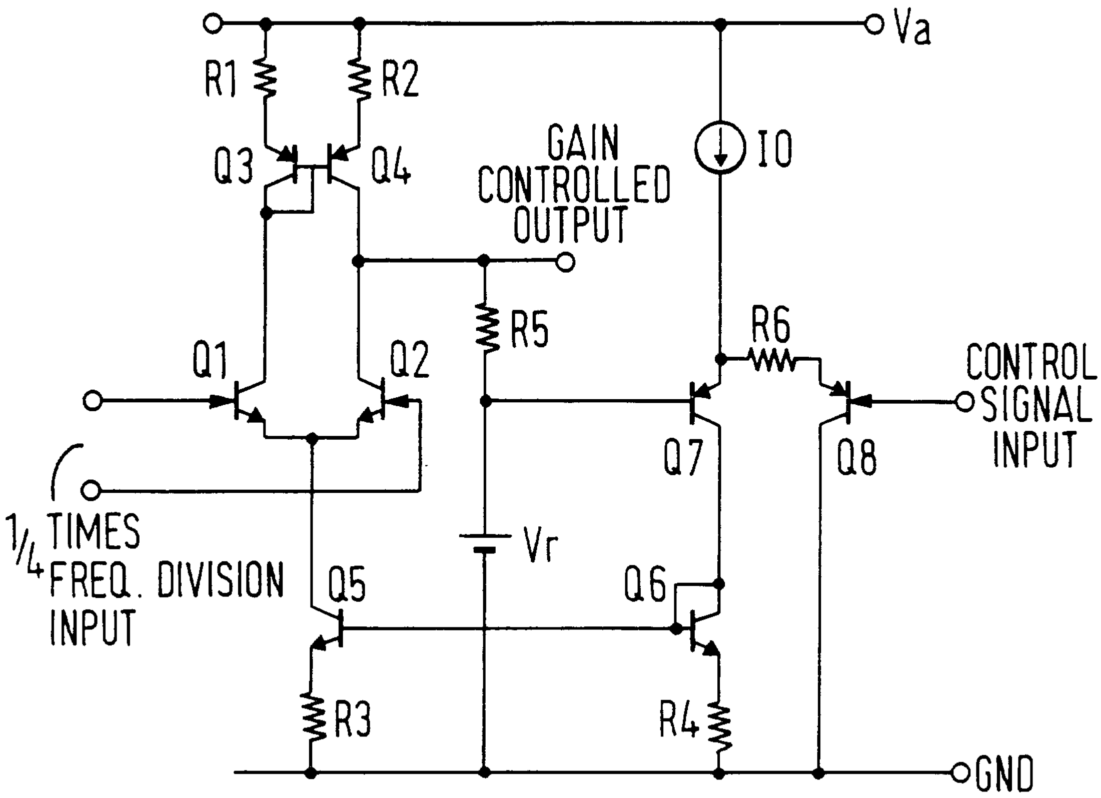
Va
R1
R2
Q3
Q4
GAIN CONTROLLED OUTPUT
I0
R5
R6
Q1
Q2
CONTROL SIGNAL INPUT
Q7
Q8
1/4 TIMES FREQ. DIVISION INPUT
Vr
Q5
Q6
R3
R4
GND

FIG. 4

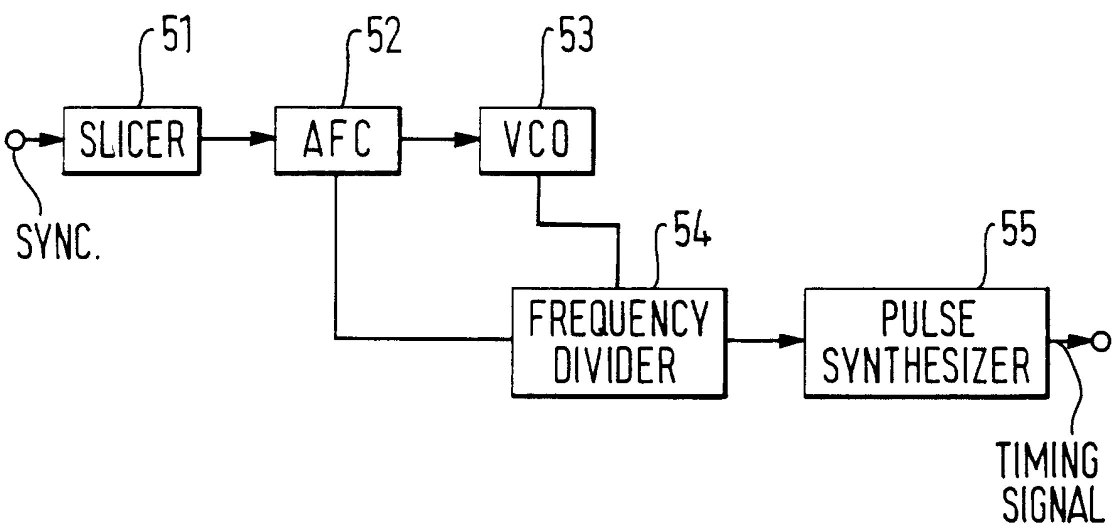
51
52
53
SLICER
AFC
VCO
SYNC.
54
55
FREQUENCY DIVIDER
PULSE SYNTHESIZER
TIMING SIGNAL

FIG. 5

FIG.6(a)
FIG.6(b)
FIG.6(c)
FIG.6(d)

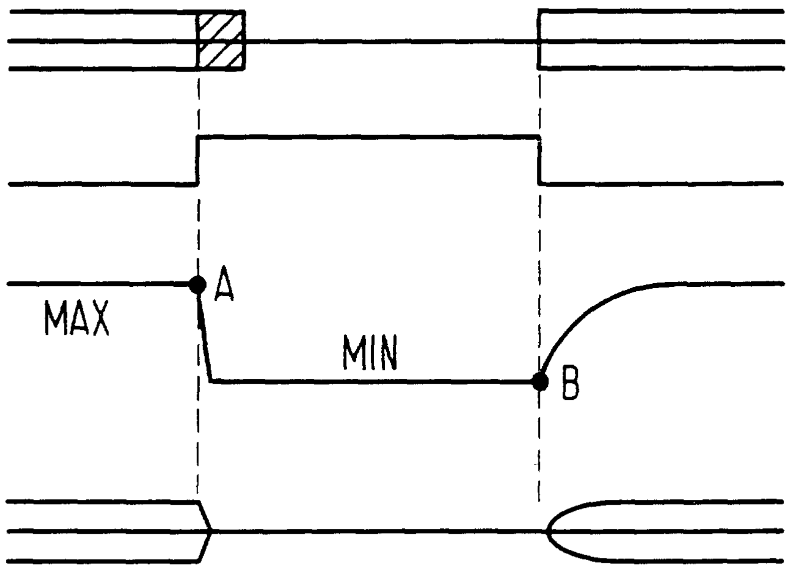


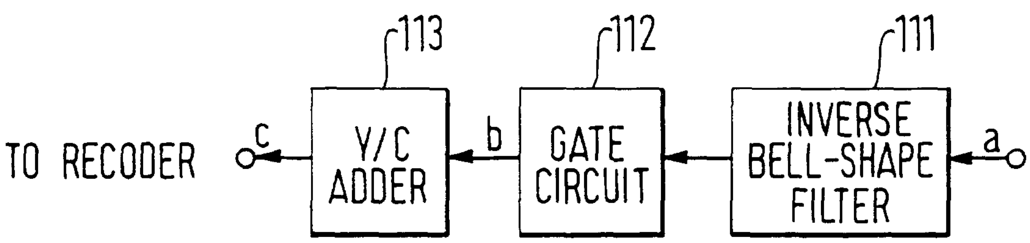


FIG.10(a)

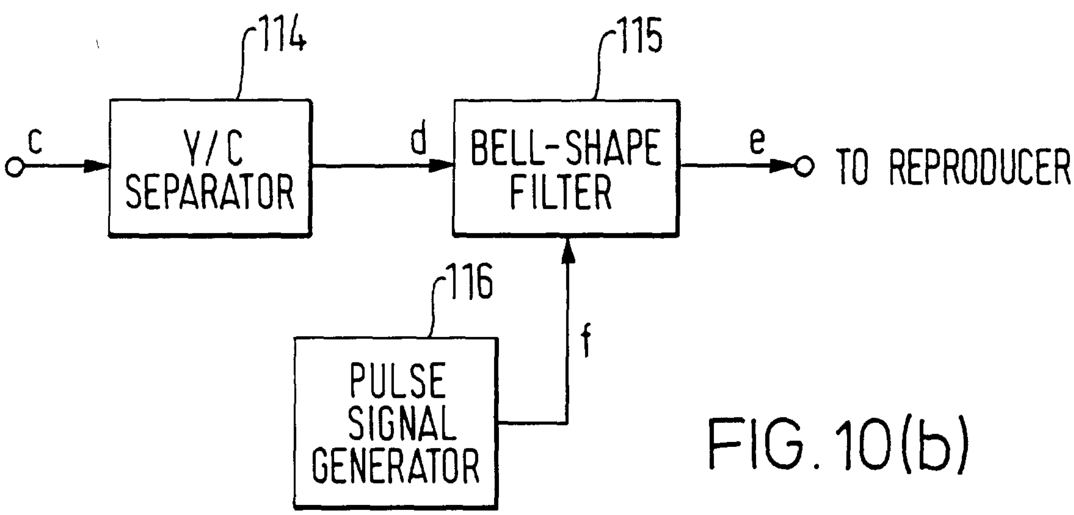


FIG.10(b)

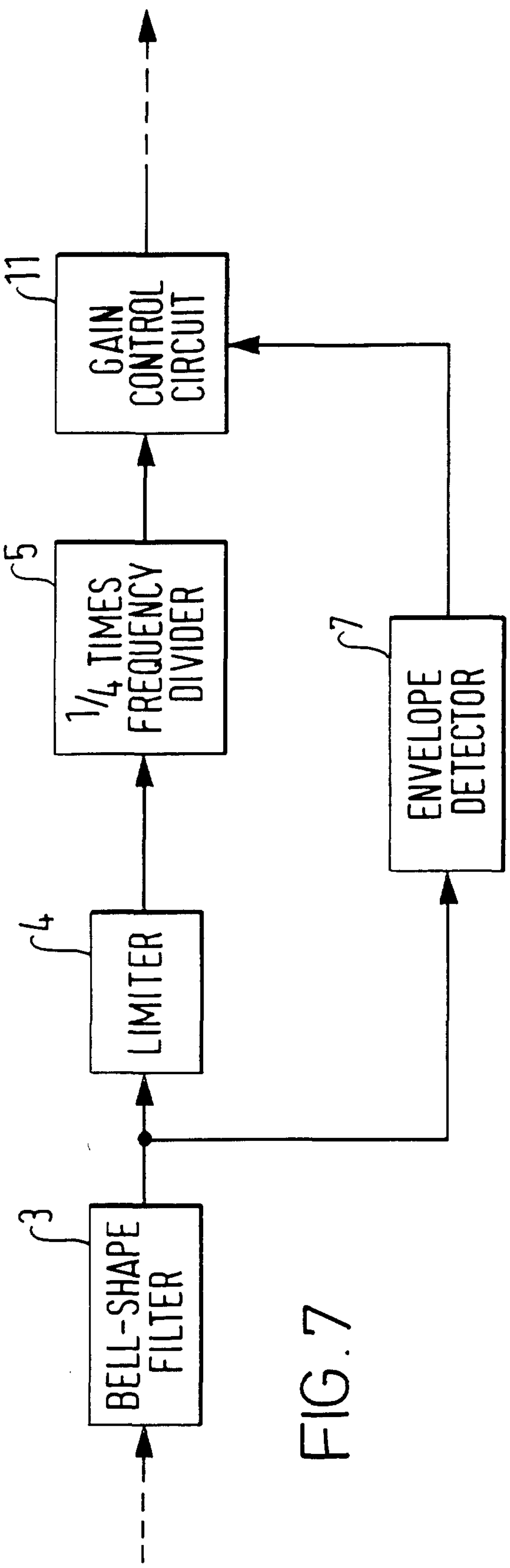
BELL-SHAPE FILTER
3
LIMITER
4
1/4 TIMES FREQUENCY DIVIDER
5
GAIN CONTROL CIRCUIT
11
ENVELOPE DETECTOR
7

FIG. 7

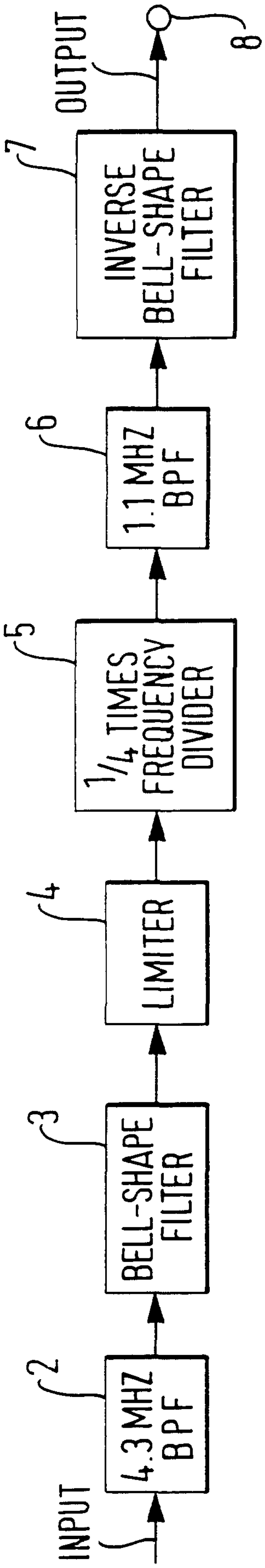
INPUT
4.3 MHZ BPF
2
BELL-SHAPE FILTER
3
LIMITER
4
1/4 TIMES FREQUENCY DIVIDER
5
1.1 MHZ BPF
6
INVERSE BELL-SHAPE FILTER
7
OUTPUT
8

FIG. 8

FIG. 9(a)
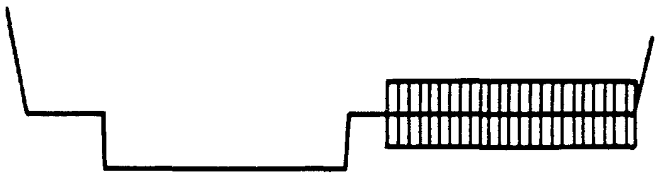

FIG. 9(b)
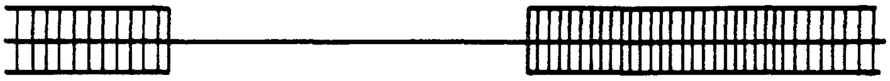

FIG. 9(c)
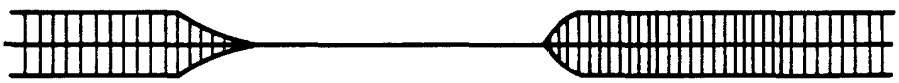

FIG. 9(d)
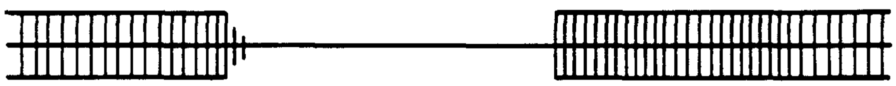

FIG. 9(e)
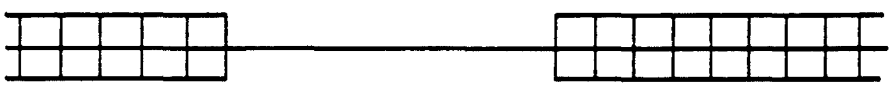

FIG. 9(f)
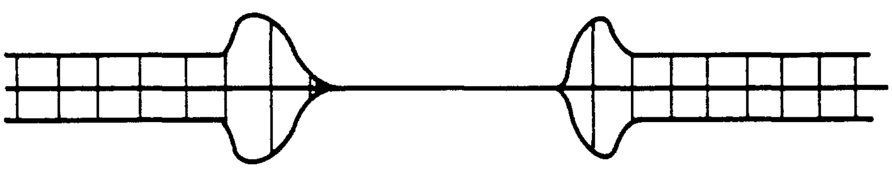

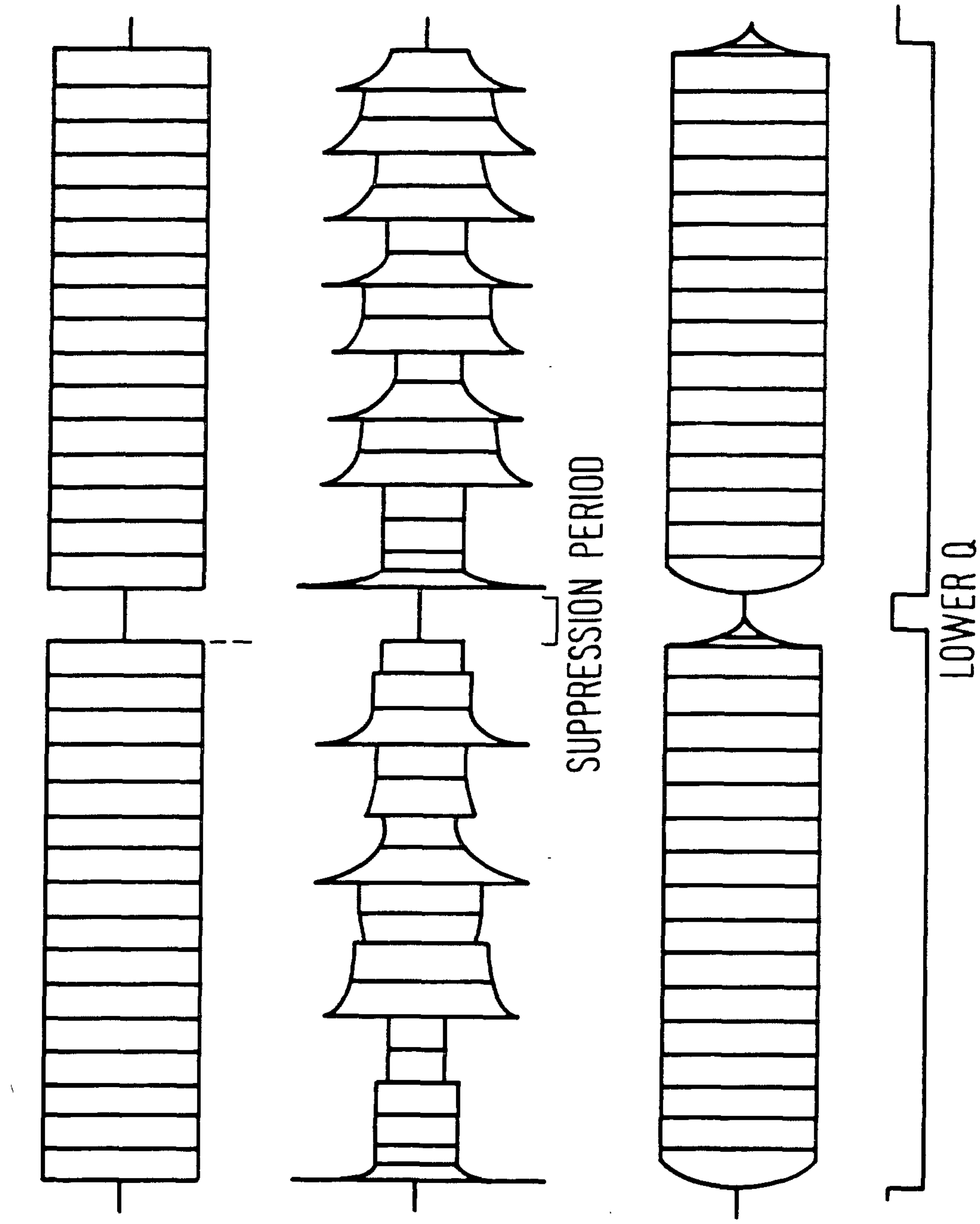


FIG.11(a)
FIG.11(b)
FIG.11(d)
FIG.11(e)
FIG.11(f)

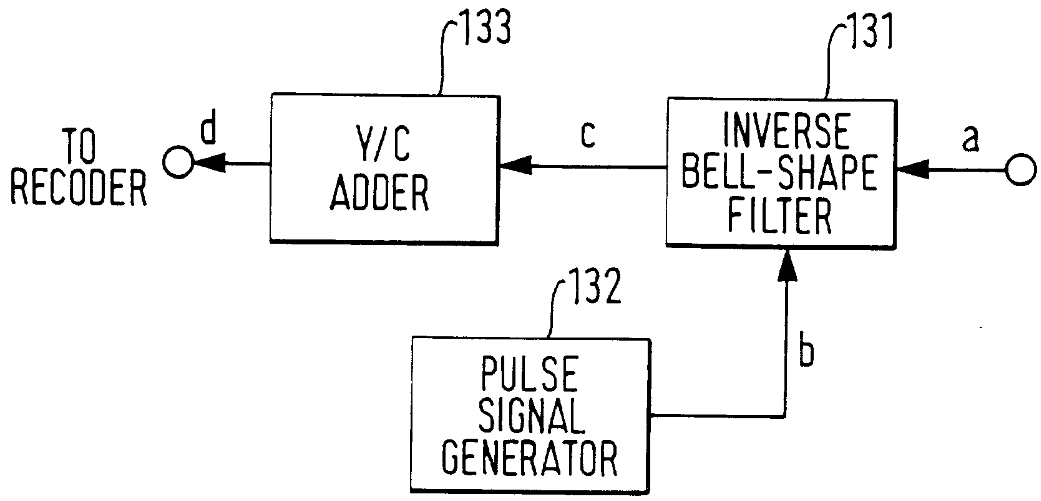


FIG. 12(a)

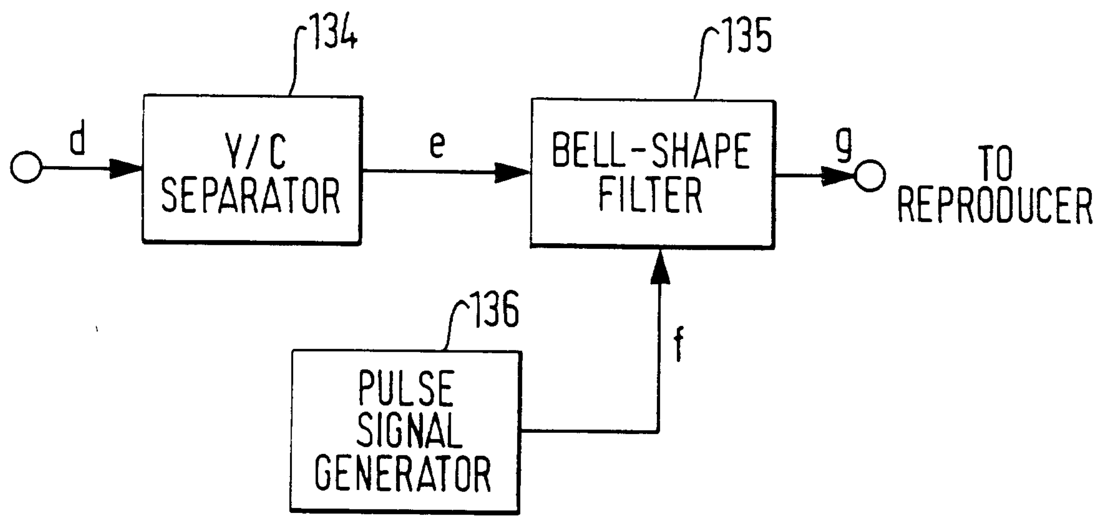


FIG. 12(b)

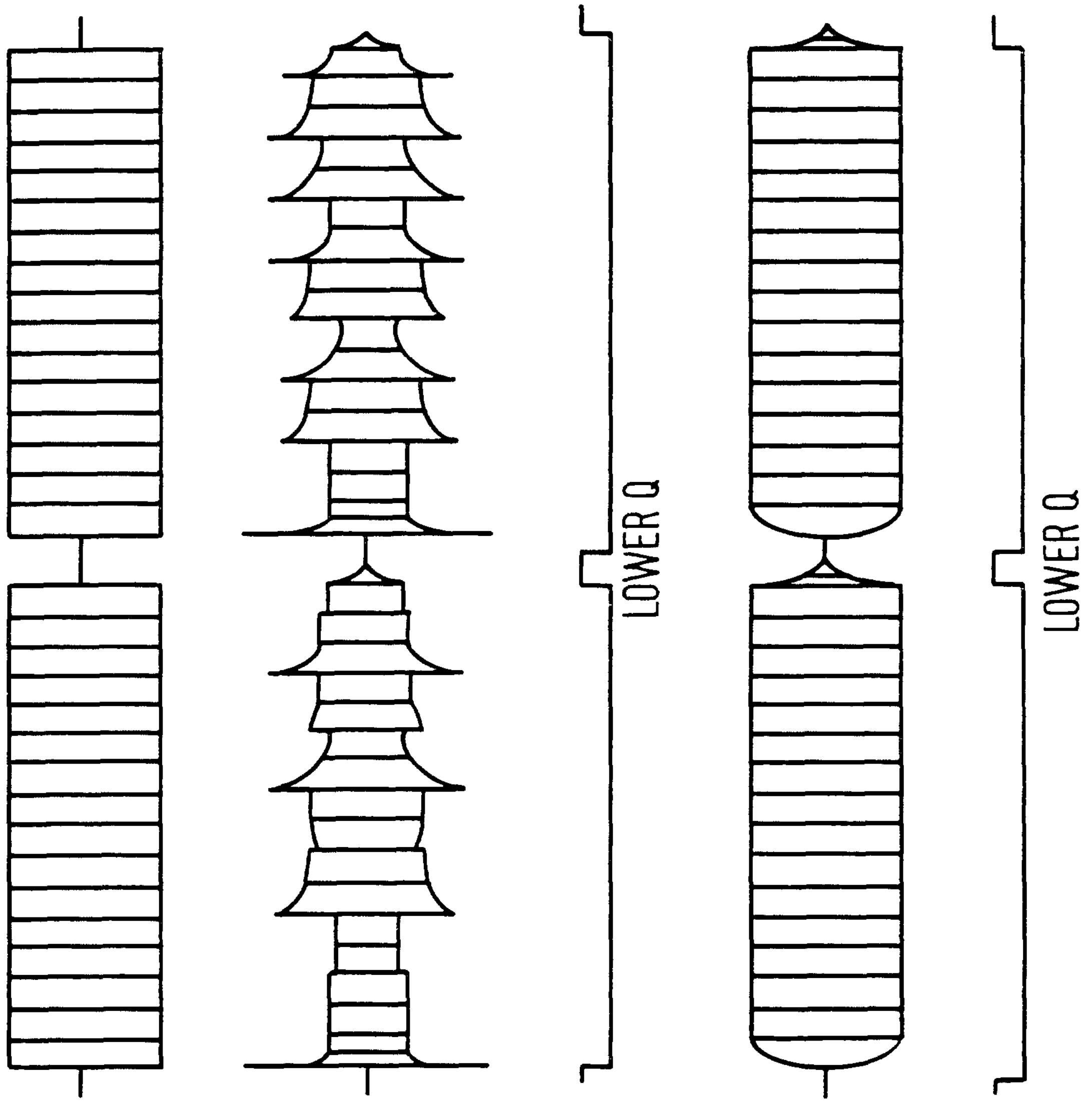


FIG.13(a)

FIG.13(c)

FIG.13(e)

FIG.13(b)

FIG.13(g)

FIG.13(f)

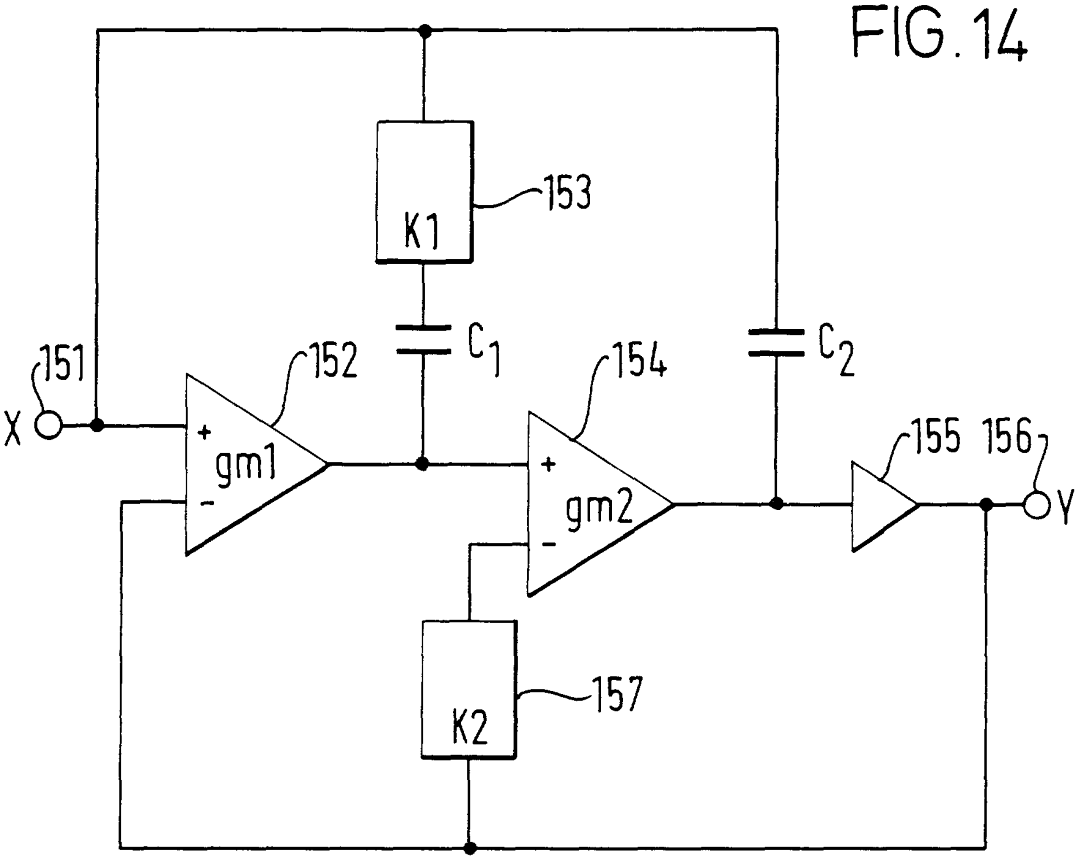


FIG.14

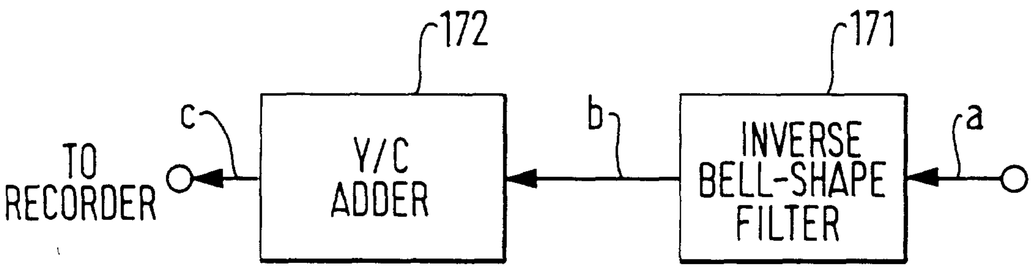


FIG.15(a)

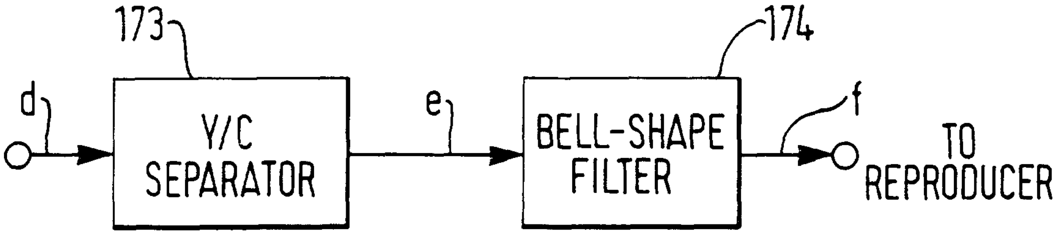


FIG.15(b)

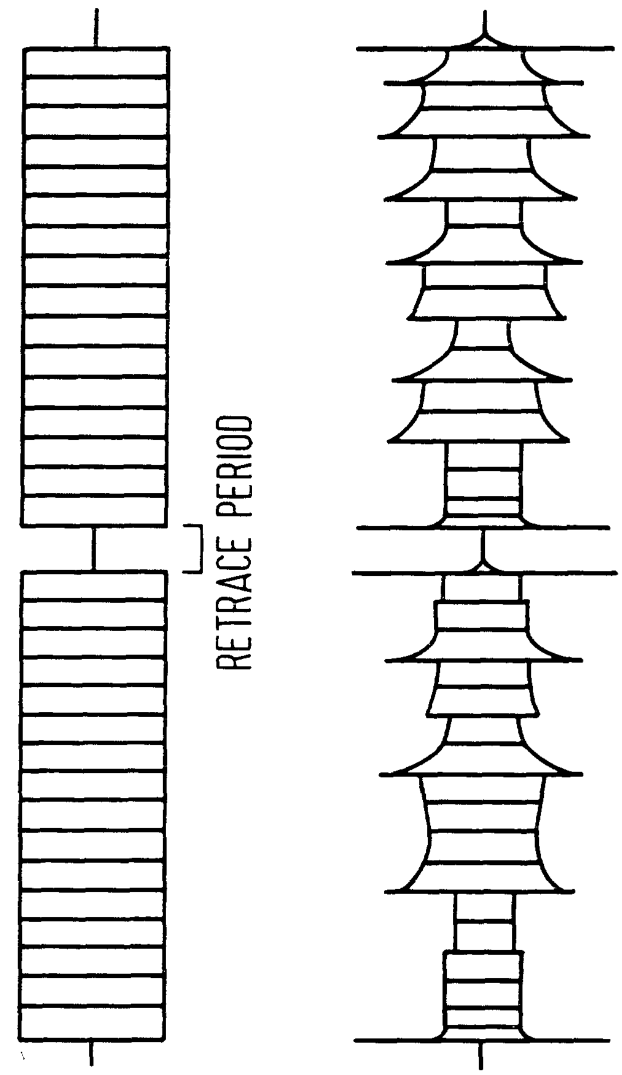


FIG.16(a)

FIG.16(b)

FIG.16(e)

FIG.16(f)

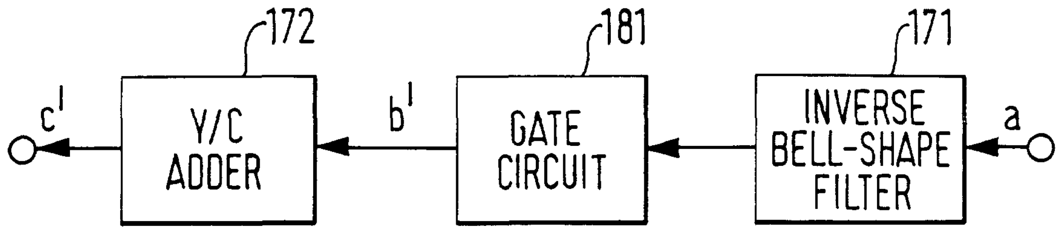


FIG. 17(a)

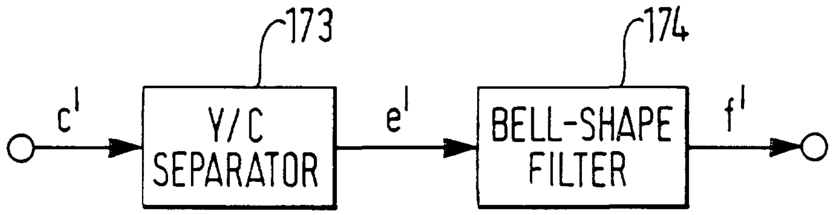


FIG. 17(b)

FIG.18(a)

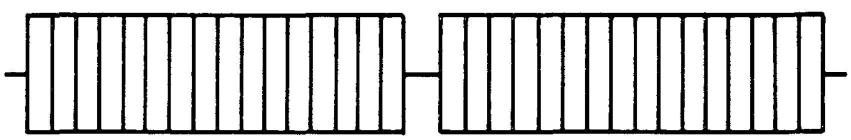

FIG.18(b')

FIG.18(e')

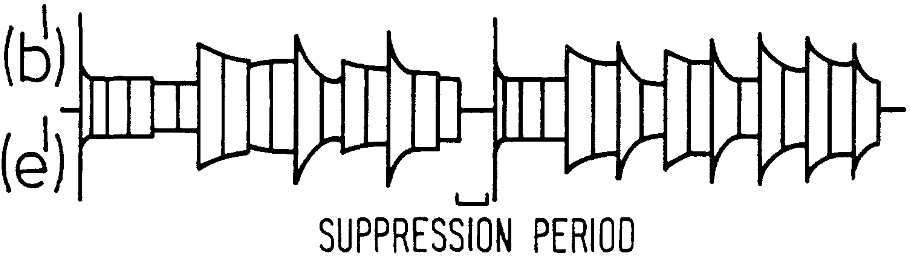


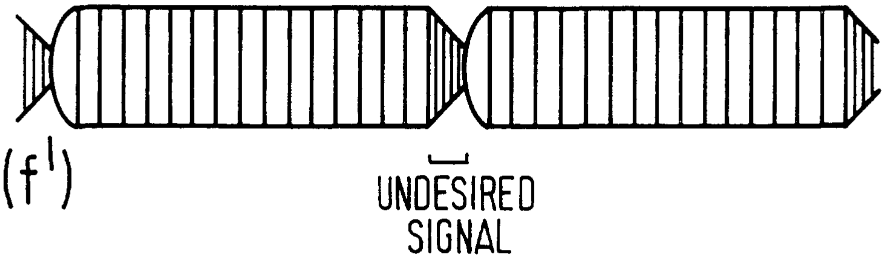


FIG. 18(f')